# EUROPÄISCHE PATENTANMELDUNG

(11) **EP 2 458 180 A1**
(43) Veröffentlichungstag der Anmeldung: **30.05.2012**
(21) Anmeldenummer: 10193132.7
(22) Anmeldetag: 30.11.2010
(51) Int. Cl.: F02C 9/46, F02C 9/28, F02C 7/232

(54) **Verfahren zum Betreiben einer Gasturbine bei Lastabwurf, Vorrichtung zum Regeln des Betriebs einer Gasturbine sowie Kraftwerk**

(71) Anmelder: Siemens Aktiengesellschaft, 80333 München (DE)
(72) Erfinder: Hesse, Holger, 45144, Essen (DE)

(57) **Zusammenfassung**

Die Erfindung betrifft ein Verfahren zum Begrenzen einer Überdrehzahl einer Gasturbine (12) bei Lastabwurf mit den Schritten: Betreiben der Gasturbine (12) durch Verbrennen von Brennstoff (F) in einer Brennkammer (22) der Gasturbine (12) und Zugabe von Verbrennungsluft. Weiter betrifft die Erfindung eine Vorrichtung (34) zum Regeln eines solchen Betriebes und ein Kraftwerk (10) mit einer Gasturbine (12) und einem Generator (14). Um die maximale Überdrehzahl des Gasturbinenrotors (16) bei Lastabwurf oder Schnellschluss weiter zu verringern, wird vorgeschlagen, dass mit oder unmittelbar nach dem Lastabwurf der Brennkammer (22) zusätzlich ein Gasvolumen zugeführt wird, neben der ansonsten zugeführten Verbrennungsluft des ansonsten zugeführten Brennstoffstroms.

## Beschreibung

Die Erfindung betrifft ein Verfahren zum Betreiben einer Gasturbine bei Lastabwurf und/oder bei Schnellschluss mit den Schritten: Betreiben der Gasturbine durch Verbrennen von Brennstoff in zumindest einer Brennkammer der Gasturbine unter Zugabe von Verbrennungsluft. Weiter betrifft die Erfindung eine Vorrichtung zum Regeln des Betriebs einer Gasturbine, mit welchem ein Verfahren zum Betreiben einer Gasturbine bei Lastabwurf und/oder bei Schnellschluss durchführbar ist sowie ein Kraftwerk, umfassend eine Gasturbine mit zumindest einer Brennkammer und einem Verdichter, wobei der Brennkammer vom Verdichter bereitgestellter Verbrennungsluft und Brennstoff zuführbar ist.

Kraftwerke und stationäre Gasturbine sowie Verfahren zum Betreiben von Gasturbinen sind aus dem Stand der Technik in großem Umfang bekannt. Die stationären Gasturbinen treiben zumeist einen elektrischen Generator an, der die von ihm erzeugte elektrische Energie in ein Stromverteilungsnetz einspeist. Der Wellenstrang des Kraftwerks, welcher den Generatorrotor und den Gasturbinenrotor umfasst, dreht währenddessen mit der Netzfrequenz des elektrischen Stromverteilungsnetzes: bei 50 Hz Netzfrequenz mit einer Drehzahl von 3000 min⁻¹ und bei 60 Hz Netzfrequenz mit einer Drehzahl von 3600 min⁻¹. Die Drehzahl wird dem Wellenstrang von der Netzfrequenz aufgrund der zumeist synchron arbeitenden Generatoren aufgezwungen.

Im Fall der unplanmäßigen Trennung des Generators vom Stromverteilungsnetz fällt einerseits die den Gasturbinenrotor abbremsende Last weg. Andererseits wird die Drehzahl des Wellenstrangs nicht mehr durch die Netzfrequenz vorgegeben. Mit Eintritt des vorgenannten Falls, welcher auch als Lastabwurf bekannt ist, wurden bisher die Brennstoffventile auf ein für einen Leerlaufbetrieb notweniges Maß geschlossen. Sofern ein mehrstufiges Brennersystem vorhanden ist, werden alle Brennerstufen mit Ausnahme derer für den Leerlaufbetrieb notwendigen, abgeschaltet und deren Brennstoffventile geschlossen. Aufgrund des sich in der Gasturbine einstellenden Druckgefälles entweicht der zwischen den geschlossenen Brennstoffventilen und den Brennstoffdüsen in der Brennstoffleitung verbliebene Brennstoffanteil in die Brennkammer. In der Brennkammer unterstützt dieser Brennstoffanteil die noch stattfindende Verbrennung, wodurch in der Turbineneinheit der Rotor noch weiter angetrieben wird. Hierdurch bescheunigt der Rotor der Gasturbine bzw. der Wellenstrangs, so dass die Drehzahl stark zunimmt und auf eine so genannte Überdrehzahl ansteigt. Danach fällt die Drehzahl wieder ab und die Gasturbine wird bei Leerlauf weiterbetrieben.

Ein ähnliches Verfahren ist für den Fall des Schnellschlusses bekannt. Ein Schnellschluss wird in der Regel bei einer Betriebsstörung der Gasturbine oder des Kraftwerks ausgelöst. Auch dabei wird der Generator vom Stromverteilungsnetz getrennt. Darüber hinaus werden jedoch alle Brennstoffventile geschlossen und die Verbrennung schnellstmöglich gestoppt. Auch im diesen Fall sorgt der aus den Leitungen zwischen Brennstoffventilen und Brennerdüsen sich entspannende Brennstoff noch für eine kurze Drehzahlbeschleunigung der Gasturbine. Danach läuft der Rotor jedoch aus und wird nur bei geringer Drehzahl von einigen hundert Umdrehungen pro Minute im so genannten Turn-Betrieb gehalten, um die Gasturbine abzukühlen.

Sowohl beim Lastabwurf als auch beim Schnellschluss muss demnach sicher gestellt werden, dass die sich einstellende Drehzahlbeschleunigung nicht zu schnell erfolgt und eine bestimmte Überdrehzahl nicht überschritten wird. Andernfalls können diese Betriebsfälle zu umfangreichen und dauerhaften Beschädigungen sowohl in der Gasturbine als auch im Generator führen.

Aus diesem Grund ist es stets besonders wichtig, bei Lastabwurf und Schnellschluss die Überdrehzahl des Rotors bzw. des Wellenstrangs und den Gradienten der Drehzahlbeschleunigung möglichst klein zu halten.

Um das Leitungsvolumen zwischen den Brennstoffventile und den Brennstoffdüsen so gering wie möglich zu halten, wurden daher bisher die entsprechenden Brennstoffventile so nah wie möglich an den Brennstoffdüsen angeordnet. Hierdurch konnte eine Begrenzung der Überdrehzahl erreicht werden. Der Verringerung des Abstands sind jedoch temperaturbedingte oder geometrische Grenzen gesetzt. Insgesamt besteht daher das Bestreben, die Überdrehzahl und die maximale Beschleunigung der Rotordrehzahl weiter zu verringern.

Weiter ist bekannt, dass Gasturbinen auch mit niederkalorischen Brennstoffen, beispielsweise Synthesegas, befeuert werden können. Derartige Gasturbinen weisen - im Vergleich zu Gasturbinen mit identischer Nennleistung, die mit hochkalorischem Brennstoff betrieben werden, wesentlich größere Leitungsquerschnitte für die Brennstoffleitungen auf, um die entsprechende Energiemenge ebenso bereitstellen zu können. Dies hat zur Folge, dass bei Gasturbinen für niederkalorische Brennstoffe das bisherige Konzept zur Begrenzung der Überdrehzahl des Rotors der Gasturbine bzw. des Wellenstrangs des Kraftwerks nicht ausreichend ist.

Aufgabe der Erfindung ist daher die Bereitstellung eines Verfahrens zum Betreiben einer Gasturbine bei Lastabwurf und/oder Schnellschluss, mit der eine möglichst kleine Überdrehzahl und/oder eine geringe Drehzahlbeschleunigung realisiert werden kann. Weitere Aufgabe der Erfindung ist die Bereitstellung einer Vorrichtung zum Regeln des Betriebs einer Gasturbine, mit welcher die Überdrehzahl der Gasturbine bei Lastabwurf und Schnellschluss verringert werden kann. Weitere Aufgabe der Erfindung ist die Bereitstellung eines Kraftwerks, bei dem ebenfalls die genannten Nachteile sicher vermieden werden.

Die auf das Verfahren gerichtete Aufgabe wird mit einem Verfahren zum Betreiben einer Gasturbine bei Lastabwurf und Schnellschluss gelöst, welches gemäß den Merkmalen des Patentanspruchs 1 ausgestaltet ist. Die Lösung der auf die Vorrichtung gerichteten Aufgabe umfasst die Merkmale des Anspruchs 7. Die auf ein Kraftwerk gerichtete Aufgabe wird mit einem solchen nach den Merkmalen des Anspruchs 9 gelöst.

Der Erfindung liegt die Erkenntnis zu Grunde, dass die Beschleunigung der Rotordrehzahl und die Überdrehzahl auch vom Druckniveau in der Brennkammer und dessen zeitlichen Verlauf abhängig sind.

Alle Lösungen sehen vor, mit oder unmittelbar nach dem Lastabwurf und/oder Schnellschluss der Brennkammer zusätzlich ein Gasvolumen zuzuführen, um das Druckniveau in der Brennkammer und dessen zeitlichen Verlauf zur Erreichung des gewünschten Zweckes entsprechend einzustellen. Der Begriff "zusätzlich" bezieht sich auf die Brennstoffmenge und die Verbrennungsluftmenge, die ansonsten nach dem Lastabwurf bzw. Schnellschluss - ohne entsprechende Maßnahme - in die Brennkammer der Gasturbine eingespeist werden würde.

Durch das schnellstmögliche Einbringen eines zusätzlichen Gasvolumens zum Brennstoff und zur Verbrennungsluft in die Brennkammer fällt das darin befindliche Druckniveau langsamer ab, verglichen mit einem Betrieb ohne Zuführung eines zusätzlichen Gasvolumens. Dies führt dazu, dass der in der Brennstoffleitung zwischen geschlossenen Brennstoffventilen und Brennstoffdüsen befindliche Restbrennstoff gegen den in der Brennkammer nun länger anstehenden erhöhten Druck sich entspannen muss, so dass unmittelbar nach dem Lastabwurf bzw. Schnellschluss zuerst eine geringere Menge an Brennstoff als bisher in die Brennkammer einströmen kann und dabei leistungsabgebend verbrannt wird. Die verzögerte Leistungsabgabe nach dem Schließen der Brennstoffventile führt zu einer geringeren Beschleunigung der Rotordrehzahl. Gasturbinenrotor und der daran angekoppelte Generatorrotor als Wellenstrang des Kraftwerks reagieren dann mit einer geringeren Überdrehzahl, als es ohne Zuführung des zusätzlichen Gasvolumens der Fall gewesen wäre. Folglich wird mit dem angegebenen Verfahren die maximale Überdrehzahl bei Lastabwurf bzw. Schnellschluss begrenzt, was zur Folge hat, dass die rotierenden Bauteile eine geringere mechanische Belastung und auch eine geringe Fliehkraftbelastung erfahren. Dies verlängert die Lebensdauer der rotierenden Bauteile und schützt die Komponenten vor Beschädigungen. Vorzugsweise wird als Gasvolumen Druckluft verwendet. Selbstverständlich ist es auch vorstellbar, dass andere Medien z.B. Stickstoff oder Ähnliches zur Aufrechterhaltung eines höheren Drucks in der Brennkammer nach dem Lastabwurf bzw. Schnellschluss eingespeist werden.

Vorzugsweise kann das Gasvolumen einem entsprechend dimensionierten Gasspeicher oder Gastank entnommen werden. Bei Gasturbinen, die für einen Betrieb mit niederkalorischem Brennstoff ausgelegt sind und eine so genannte Luftentnahmeleitung aufweisen, kann das Gasvolumen dieser Luftentnahmeleitung entnommen werden. Derartige Gasturbinen weisen in der Regel dann eine Luftentnahmeleitung auf, wenn Druckluft für die Herstellung des niederkalorischen Brennstoffs benötigt wird. Die entnommene Luftmenge stellt einen signifikanten Anteil des Gesamt-Verdichtermassenstroms dar. In der Regel wird die Druckluft einer Luftzerlegungsanlage zugeführt. Ein Teil der in ihre Bestandteile zerlegten Luft wird dann zur Erzeugung des niederkalorischen Brennstoffs eingesetzt. Da üblicher Weise derartige Luftentnahmeleitungen vergleichsweise lang sind - in der Regel 100m und länger - weisen sie ein entsprechendes Volumen auf.

Obwohl der Luftentnahmeleitung im Betrieb kontinuierlich Verdichterluft eingangsseitig zugeführt und ausgangsseitig entnommen wird, kann diese auch als ein Speicher für ein Gasvolumen aufgefasst und eingesetzt werden kann. Insofern wird in der Luftentnahmeleitung eine vergleichsweise große Luftmenge gespeichert, die im Falle des Lastabwurfs bzw. Schnellschlusses dann nicht der Luftzerlegungsanlage zugeführt wird. Vielmehr wird dann die darin aktuell vorhandene Luft entgegen ihrer bisherigen Strömungsrichtung zurück in Richtung Gasturbinenverdichter und dann weiter zur Brennkammer geführt, um diese als zusätzliches Gasvolumen der Brennkammer zuzuführen. Dazu ist lediglich erforderlich, dass das in der Luftentnahmeleitung eingangsseitige vorhandene Ventil bei Lastabwurf und Schnellschluss geöffnet bleibt.

Das Verfahren kann vorzugsweise bei Kraftwerken durchgeführt werden, bei welchen eine Gasturbine in Betrieb einen elektrischen Generator antreibt, welcher an ein Stromverteilungsnetz angeschlossen ist und bei dem der Lastabwurf durch eine schlagartige Reduzierung der vom Generator zu erbringenden elektrischen Leistung oder durch die Trennung des Generators vom Stromverteilungsnetz erfolgt.

Selbstverständlich kann das erfindungsgemäße Verfahren vorteilhafterweise auch dann eingesetzt werden, wenn der Lastabwurf oder Schnellschluss unplanmäßig erfolgt oder auch nur simuliert wird. Letzteres ist beispielsweise bei der Inbetriebsetzung neu erstellter Gasturbinenanlagen erforderlich, bei denen die bestimmungsgemäße Wirkungsweise der Gasturbine dem Betreiber nachgewiesen werden muss.

Die erfindungsgemäße Vorrichtung umfasst einen Eingang, mit welchem ein den Lastzustand der Gasturbine repräsentierendes Signal oder ein den Kopplungszustand von Generator und Stromverteilungsnetz repräsentierendes Signal zuführbar ist. Weiter umfasst die Vorrichtung einen Ausgang, dessen Signal ein Stellorgan steuert, mit dessen Hilfe einer Brennkammer der Gasturbine ein im Normalbetrieb der Gasturbine nicht zum Zuführen in die Brennkammer vorgesehenes Gasvolumen zuführbar ist, wobei eine Einheit vorgesehen ist, die das Ausgangssignal in Abhängigkeit vom Eingangssignal steuert, vorzugsweise nach den voranbeschriebenen Verfahren.

Das erfindungsgemäße Kraftwerk umfasst eine Gasturbine mit zumindest einer Brennkammer und einem Verdichter, wobei der Brennkammer vom Verdichter bereitgestellte Verbrennungsluft und Brennstoff zuführbar ist. Erfindungsgemäß weist das Kraftwerk zudem einen mit einem Gasvolumen gefüllten Raum auf, und es sind Mittel vorgesehen, mit denen bei Lastabwurf und/oder Schnellschluss das Gasvolumen zusätzlich zur Verbrennungsluft und zum Brennstoff in die Brennkammer einspeisbar ist.

Die auf das Verfahren gerichteten Merkmale lassen sich in analoger Weise ebenso auf ein Kraftwerk übertragen, wobei die Verfahrensvorteile dann entsprechend auftreten.

Weitere Vorteile, Merkmale und Eigenschaften der Erfindung werden anhand von bevorzugten Ausführungsbeispielen in der folgenden Zeichnung näher erläutert. Zweckmäßige Ausgestaltungen ergeben sich auch durch vorteilhafte Kombinationen von Merkmalen der dargestellten erfindungsgemäßen Vorrichtung.

Es zeigen:
- FIG 1: in schematischer Darstellung ein Kraftwerk mit einigen Komponenten einer Gasturbine und einen daran angekoppelten Generator;
- FIG 2: ein Zeit-Druck-Diagramm des Drucks in einer Brennkammer der Gasturbine;
- FIG 3: ein Zeit-Drehzahl-Diagramm des Gasturbinenrotors;
- FIG 4: eine zu FIG 1 alternative Ausgestaltung des erfindungsgemäßen Kraftwerks in schematischer Darstellung.

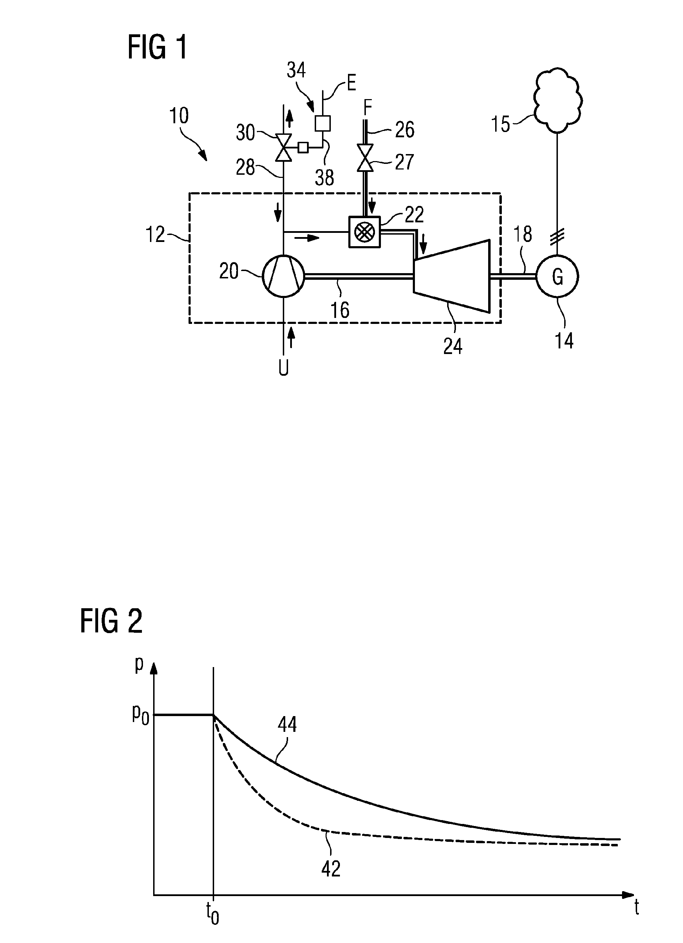

In FIG 1 ist ein Kraftwerk 10 in schematischer Darstellung gezeigt. Das Kraftwerk 10 umfasst eine Gasturbine 12 und einen daran angekoppelten Generator 14. Dieser speist im Betrieb die von ihm währenddessen erzeugte elektrische Energie in ein Stromverteilungsnetz 15 ein. Das Kraftwerk 10 kann ferner auch eine Dampfturbine umfassen. Die Kopplung des Generators 14 mit der Gasturbine 12 bzw. der Dampfturbine erfolgt bekanntermaßen über das Verbinden des Gasturbinenrotors 16 und ggf. des Dampfturbinenrotors mit dem Rotor 18 des Generators 14 zu einem Wellenstrang. Weiter, hier dargestellte Komponenten der Gasturbine 12 sind der Verdichter 20, die Brennkammer 22 und die Turbineneinheit 24. Die Brennkammer 22 kann einerseits als Ringbrennkammer ausgestaltet sein. Andererseits kann die Brennkammer 22 auch mehrere Verbrennungsräume umfassen, die als Rohrbrennkammern bekannt sind.

Die in FIG 1 dargestellte Gasturbine 12 ist zu einem Betrieb mit einem niederkalorischen Brennstoff F, beispielsweise Synthesegas oder ähnlichem, ausgestattet, welcher der Brennkammer 22 über eine entsprechende Brennstoffleitung 26 und daran angeschlossene Hauptbrenner zuführbar ist. In der Brennstoffleitung ist ein Brennstoffventil 27 angeordnet, welches bei Lastabwurf die Zufuhr von Brennstoff F in die Brennkammer 22 über die Hauptbrenner abgeschaltet. Sofern die Gasturbine 12 auch mit Pilotbrennern ausgestattet ist, werden diese selbst bei Lastabwurf weiter mit einem Brennstoff versorgt.

Der Verdichter 20 ist so ausgestaltet und dimensioniert, dass dieser während des Betriebs wesentlich mehr Umgebungsluft U ansaugt und verdichtet, als die für die Verbrennung des zugeführten Brennstoffs F erforderliche Menge. Aus diesem Grund umfasst die Gasturbine 12 am Verdichterausgang eine Luftentnahmeleitung 28, durch die eine größere Menge an Verdichterendluft entnommen und beispielsweise zu einer nicht dargestellten Luftzerlegungsanlage weitergeleitet werden kann. Die Entnahme von Verdichterendluft für die Luftzerlegungsanlage kann dabei über ein Ventil 30 gesteuert werden, welches üblicher Weise in unmittelbarer Nähe des Verdichtergehäuses vorgesehen ist. Mit anderen Worten, das Ventil 30 ist in der Luftentnahmeleitung 28 eingangsseitig angeordnet.

Während des Betriebs des in FIG 1 dargestellten ersten Ausführungsbeispiels des Kraftwerks 10 wird Brennstoff F in der Brennkammer 22 unter Zugabe von im Verdichter 20 verdichteter Luft zu einem Heißgas verbrannt, welches sich anschließend in der Turbineneinheit 24 an den Laufschaufeln des Gasturbinenrotors 16 arbeitsleistend entspannt. Der am Gasturbinenrotor 16 starr angekoppelte Generatorrotor 18 wird dadurch angetrieben, wodurch der Generator 14 währenddessen elektrische Energie erzeugt und in das Stromverteilungsnetz 15 einspeist.

FIG 2 zeigt den Druckverlauf in der Brennkammer 22. Bis zum Zeitpunkt t0 ist der Druckverlauf konstant (Normalbetrieb), unter der Annahme, dass die Gasturbine 12 eine beliebige, jedoch konstante Last erbringen muss.

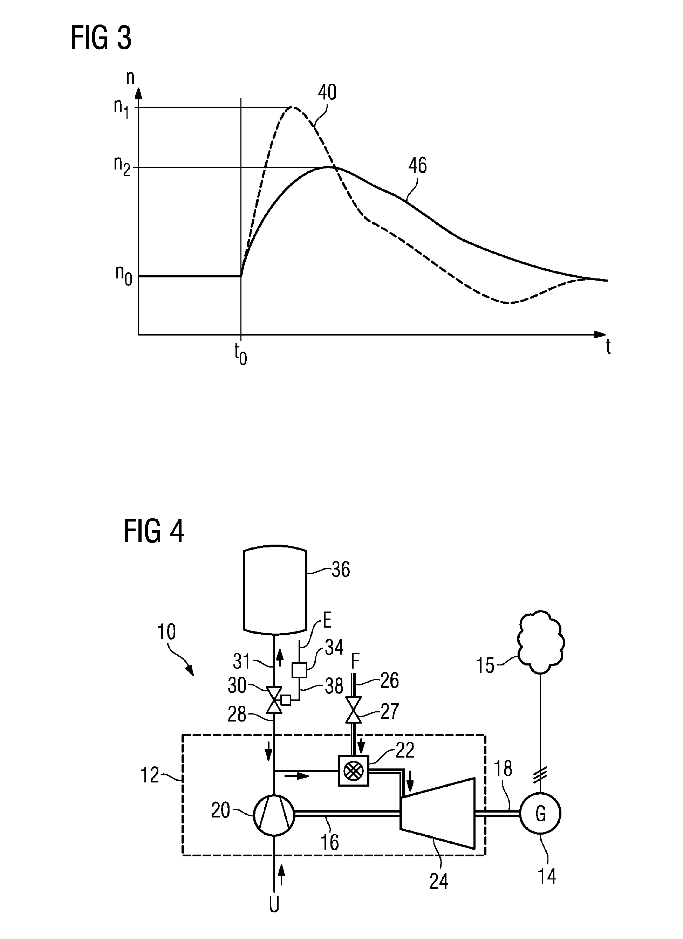

In FIG 3 ist die Drehzahl des Gasturbinenrotors 16 und des daran starr angekoppelten Generatorrotors 18 gezeigt, wobei die Drehzahl n0 bis zum Zeitpunkt t0 von der Netzfrequenz des Stromverteilungsnetzes 15 vorgegeben ist.

Zum Zeitpunkt t0 tritt ein Lastabwurf ein, beispielsweise durch eine ungeplante Trennung des Generators 14 vom Stromverteilungsnetz 15. Durch den Verlust des Kontakts des Generators 14 zum Stromverteilungsnetz 15 wird die Drehzahl der Rotoren 16, 18 nicht mehr von der Netzfrequenz des Stromverteilungsnetzes 15 vorgegeben. Gleichfalls fällt die bremsende Wirkung weg, die die elektrisch abgefragte Leistung bisher erzeugte.

Bei aus dem Stand der Technik bekannten Gasturbinen fiel der Druck in der Brennkammer relativ schnell nach dem Lastabwurf ab. Der bisherige Verlauf des Brennkammerdrucks p ist in FIG 2 mit gestrichelter Linienart als Kennlinie 42 schematisch dargstellt. Dadurch stellte sich ein Drehzahlverlauf ein, wie er in FIG 3 in der in gestrichelter Linienart dargestellten Kennlinie 40 wiedergegeben ist. Demnach stieg die Drehzahl der Rotoren mit großem Gradient - also vergleichsweise schnell - bis zu einer maximalen Überdrehzahl n1 an und sank danach mit vergleichbar großem, jedoch vorzeichennegiertem Gradient nach einem kurzen Unterschwinger auf die Solldrehzahl n0 wieder ab.

Erfindungsgemäß ist nun vorgesehen, dass zum Begrenzen der Überdrehzahl einer Gasturbine 12 bei Lastabwurf mit - also zum Zeitpunkt t0 - oder unmittelbar nach dem Lastabwurf - also unmittelbar nach dem Zeitpunkt t0 - der Brennkammer 22 ein zusätzliches Gasvolumen zum verzögerten Druckabfall in der Brennkammer 22 zugeführt wird. In der gemäß FIG 1 dargestellten Ausgestaltung des Kraftwerks 10 wird dies erreicht, indem das in der Luftentnahmeleitung 28 angeordnete Ventil 30 bei Lastabwurf nicht geschlossen wird wie bisher, sondern geöffnet bleibt. Die sich dann einstellenden Druckverhältnisse in der Gasturbine führen dazu, dass das stromab des Ventils 30 in der Luftentnahmeleitung 28 angeordnete Gasvolumen, sprich Verdichterendluft, seine Strömungsrichtung sofort umkehrt und unverzüglich in die Brennkammer 22 einströmt. Die Luftentnahmeleitung 28 dient somit als Gasspeicher. Aufgrund der Bereitstellung des zusätzlichen Gasvolumens aus der Luftentnahmeleitung 28 und dem Zuführen des darin gespeicherten Gasvolumens in die Brennkammer 22 kann der Druckabfall in der Brennkammer 22 verzögert werden, verglichen zum Stand der Technik. Dies ist in FIG 2 dargestellt. Die darin gezeigte, in Volllinie gezeichnete Kennlinie 44 zeigt den in seinem Abfall verzögerten Druckverlauf in der Brennkammer 22 beim Durchführen des erfindungsgemäßen Verfahrens.

Durch den verzögerten bzw. langsameren Druckabfall in der Brennkammer 22 entweicht der in den Brennstoffleitungen zwischen dem Brennstoffventil 27 und den Brennstoffdüsen verbliebene Restbrennstoff langsamer in die Brennkammer 22, bezogen auf das Nachströmen des verbliebenen Restbrennstoffs ohne den zusätzlich eingespeisten Gasvolumen. Dies hat zur Folge, dass erstmal weniger Restbrennstoff verbrannt und somit erstmal weniger thermische Leistung in der Brennkammer 22 erzeugt wird. Demnach gibt das Heißgas auch weniger Energie in der Turbineneinheit 24 an den Gasturbinenrotor 16 ab. Durch die zeitliche Verzögerung der Leistungsabgabe unmittelbar nach dem Lastabwurf kann die maximale Überdrehzahl n2 des Gasturbinenrotors 16 abgesenkt werden. Dies ist in FIG 3 visualisiert, bei der die mit 46 bezeichnete Kennlinie den Verlauf der Rotordrehzahl angibt, welcher nach Lastabwurf zum Zeitpunkt t0 eintritt, wenn der Brennkammer 22 ein zusätzliches Gasvolumen zugeführt wird. Zwar erfolgt das Absenken auf die Nenndrehzahl n0 nach Erreichen der maximalen Überdrehzahl mit geringem Gradienten und mit höherer Drehzahl als bisher, jedoch ist dies weniger bauteilbelastend als die ansonsten bisher aufgetretene Überdrehzahl n1.

Gemäß einer alternativen Ausgestaltung der Erfindung, welche in FIG 4 schematischer dargestellt ist, kann anstelle der Luftentnahmeleitung 28 ein Gastank 36 als Gasspeicher verwendet werden, welcher beispielsweise mit Hilfe der dem Verdichter 20 entnommenen Druckluft gefüllt werden kann. Die ansonsten aus der FIG 1 bekannten Merkmale sind in FIG 4 mit identischen Bezugszeichen versehen.

Selbstverständlich ist es für die Erfindung unwesentlich, ob die in den Figuren 1 und 4 schematisch dargestellte Brennkammer 22 nun als Ringbrennkammer ausgestattet ist oder als sog. Rohrbrennkammer, von denen die Gasturbine beispielsweise 2 Stück oder auch wesentlich mehr aufweisen kann.

Die in FIG 4 dargestellte Lösung eignet insbesondere auch für stationäre Gasturbinen, die zum Betrieb mit hoch- oder höherkalorischem Brennstoff betrieben werden sollen, da in der Regel derartige Gasturbinen 12 keine signifikante Entnahme von Verdichterluft aufweisen, abgesehen von der in der Turbineneinheit und in der Brennkammer verwendeten Kühl- und Sperrluft. Dementsprechend ist der in der FIG 4 dargestellte Verdichter 20 zur in der Turbineneinheit 24 vorgesehenen thermischen Leistungsabgabe passend dimensioniert.

Beide Ausgestaltungen umfassen jeweils eine Vorrichtung 34 zum Regeln des Betriebs der Gasturbine 12. Die Vorrichtung 34 umfasst zumindest einen Eingang E, welchem ein den Lastzustand der Gasturbine 12 repräsentierendes Signal oder ein den Kopplungszustand von Generator 14 und Stromverteilungsnetz 15 repräsentierendes Signal zuführbar ist. Ferner umfasst die Vorrichtung 34 einen Ausgang 38, dessen Signal ein Stellorgan, d.h. das Ventil 30 steuert, mit dessen Hilfe der Brennkammer 22 der Gasturbine 12 ein im Betrieb der Gasturbine 12 nicht zum Zuführen in die Brennkammer 22 vorgesehenes Gasvolumen zuführbar ist.

Die in den Figuren 1 und 4 dargestellten Ausführungsbeispiele dienen lediglich der Erläuterung der Erfindung und sind für diese nicht beschränken. So können insbesondere mehrere Brennkammern 22 vorgesehen sein, die jeweils einen Pilotbrenner und einen Hauptbrenner mit jeweils einer oder mehreren Stufen umfassen. Die Beschreibung der Erfindung erfolgt anhand eines Beispiels mit gasförmigem Brennstoff. Die Verwendung von gasförmigem Brennstoff ist jedoch nicht zwingend.

Die Beschreibung der Erfindung erfolgte anhand des Beispiels eines Lastabwurfs. Dennoch gilt das voranbeschriebene ebenso für einen Schnellschluss. Zu beachten ist dabei lediglich der Unterschied, dass der Schnellschluss zum Stillsetzen der Gasturbine führt.

Ingesamt betrifft die Erfindung ein Verfahren zum Begrenzen einer Überdrehzahl einer Gasturbine 12 bei Lastabwurf mit den Schritten: Betreiben der Gasturbine 12 durch Verbrennen von Brennstoff F in einer Brennkammer 22 der Gasturbine 12 und Zugabe von Verbrennungsluft. Weiter betrifft die Erfindung eine Vorrichtung 34 zum Regeln eines solchen Betriebes und ein Kraftwerk 10 mit einer Gasturbine 12 und einem Generator 14. Um die maximale Überdrehzahl des Gasturbinenrotors 16 bei Lastabwurf weiter zu verringern, wird vorgeschlagen, dass mit oder unmittelbar nach dem Lastabwurf der Brennkammer 22 zusätzlich ein Gasvolumen zugeführt wird, neben der ansonsten zugeführten Verbrennungsluft des ansonsten zugeführten Brennstoffstroms.

## Patentansprüche

1. Verfahren zum Betreiben einer Gasturbine (12) bei Lastabwurf und/oder Schnellschluss mit den Schritten:
Betreiben der Gasturbine (12) durch Verbrennen von Brennstoff (F) in einer Brennkammer (22) der Gasturbine (12) unter Zugabe von Verbrennungsluft und Antrieb einer Last, **dadurch gekennzeichnet, dass**
mit oder unmittelbar nach dem Lastabwurf bzw. Schnellschluss der Brennkammer (22) zusätzlich ein Gasvolumen zugeführt wird.

2. Verfahren nach Anspruch 1, bei dem das Gasvolumen einem Gasspeicher (36) entnommen wird.

3. Verfahren nach Anspruch 1 oder 2, bei dem als Gasvolumen Druckluft verwendet wird.

4. Verfahren nach Anspruch 1, bei dem während des Betriebs der Gasturbine (12) einem Verdichter (20) der Gasturbine (12) ein Anteil der darin verdichteten Luft über eine Luftentnahmeleitung (28) entnommen wird, und bei dem im Falle des Lastabwurfs bzw. Schnellschlusses die in der Luftentnahmeleitung (28) strömende Druckluft als Gasvolumen verwendet wird.

5. Verfahren nach einem der Ansprüche 1 bis 4, bei dem die Gasturbine (12) im Betrieb einen elektrischen Generator (14) antreibt, welcher an ein Stromverteilungsnetz (15) angeschlossen ist und bei dem der Lastabwurf durch eine schlagartige Reduzierung der vom Generator (14) zur erbringenden elektrischen Leistung oder durch die Trennung des Generators (14) vom Stromverteilungsnetz (15) erfolgt.

6. Verfahren nach einem der Ansprüche 1 bis 5, bei dem der Lastabwurf unplanmäßig erfolgt oder simuliert wird.

7. Vorrichtung (34) zum Regeln des Betriebs einer Gasturbine (12),
- mit einem Eingang (E), welchem ein den Lastzustand der Gasturbine (12) repräsentierendes Signal oder ein den Kopplungszustand von Generator (14) und Stromverteilungsnetz (15) repräsentierendes Signal zuführbar ist,
- mit einem Ausgang (38), dessen Signal ein Stellorgan (30) steuert, mit dessen Hilfe einer Brennkammer (22) der Gasturbine (12) ein Gasvolumen zuführbar ist und
- mit einer Einheit, die das Ausgangssignals in Abhängigkeit vom Eingangssignal steuert.

8. Vorrichtung (34) nach Anspruch 7, zum Durchführen des Verfahrens nach einem der Ansprüche 1 bis 6.

9. Kraftwerk (10), umfassend eine Gasturbine (12) mit zumindest einer Brennkammer (22) und einem Verdichter (20), wobei der Brennkammer (22) vom Verdichter (20) bereitgestellter Verbrennungsluft und Brennstoff (F) zuführbar ist, **dadurch gekennzeichnet, dass** ein mit einem Gasvolumen gefüllter Raum vorhanden ist und Mittel vorgesehen sind, mit denen das Gasvolumen zusätzlich zur Verbrennungsluft und zum Brennstoff (F) in die Brennkammer (22) einspeisbar ist.

10. Kraftwerk (10) nach Anspruch 9, bei dem der Raum in einem Gastank (36) angeordnet ist und die Mittel eine den Gastank (36) mit der Brennkammer (22) verbindende Leitung (31) umfasst, in welcher Leitung (31) ein Stellorgan (30) zum Öffnen und Schließen der Leitung angeordnet ist.

11. Kraftwerk (10) nach Anspruch 9 oder 10, mit einer Vorrichtung (34) nach einem der Ansprüche 7 oder 8.
